# EUROPÄISCHE PATENTSCHRIFT

(11) **EP 0 864 230 B1**
(45) Veröffentlichungstag und Bekanntmachung des Hinweises auf die Patenterteilung: **05.12.2001**
(21) Anmeldenummer: 97941983.5
(22) Anmeldetag: 06.09.1997
(51) Int. Cl.: H04N 9/31, H04N 5/74

(54) **VORRICHTUNG ZUR DARSTELLUNG VON BILDERN**
DEVICE FOR IMAGE PROJECTION
DISPOSITIF DE PROJECTION D'IMAGES

(30) Priorität: 30.09.1996 DE 19640404
(43) Veröffentlichungstag der Anmeldung: 16.09.1998
(73) Patentinhaber: Schneider Laser Technologies Aktiengesellschaft, 07548 Gera (DE)
(72) Erfinder: KRÄNERT, Jürgen, D-07743 Jena (DE); DETER, Christhard, D-07546 Gera (DE); VOGEL, Wolfgang, D-07747 Jena (DE); ENENKEL, Martin, D-73460 Hüttlingen (DE)
(74) Vertreter: Geyer, Werner, Dr.-Ing.
(86) Internationale Anmeldenummer: EP9704834
(87) Internationale Veröffentlichungsnummer: WO9815127

(56) Entgegenhaltungen:
- EP-A- 0 436 845
- WO-A-95/03676
- US-A- 5 255 117

## Beschreibung

Die Erfindung bezieht sich auf eine Vorrichtung zur Darstellung von Bildern auf einer Projektionswand, mit einem einen Laserstrahl aussendenden Laser sowie mit einer zur Ablenkung des Laserstrahls vorgesehenen Ablenkeinrichtung und mit einer Bilderzeugungseinrichtung, die an einer Steuereinrichtung zur Steuerung des Lasers sowie der Ablenkeinrichtung angeschlossen ist.

Eine solche Vorrichtung ist aus der WO-A-95103676 bekannt.

Im Showbereich werden zunehmend Bilderzeugungseinrichtungen für Lichteffekte zur Unterhaltung und Information sowohl innerhalb von geschlossenen Räumen als auch im Freien eingesetzt. Weiter sind Entwicklungen für ein Laserfernsehgerät im Gange, bei dem ebenfalls Laser zur Bilderzeugung dienen.

Bei diesen Anwendungen, bei denen die Nutzstrahlung von Lasern im sichtbaren Spektralbereich liegt und bei denen mehrere Watt mittlerer Leistung benötigt werden, ist der räumliche, dem Laser zugängliche Bereich für Personen gesundheitsschädlich. Dies betrifft vor allem die Auflichtprojektion, bei der sich Personen zwischen der Bilderzeugungseinrichtung und einer Projektionswand befinden können. Eine Gefährdung besteht dann, wenn Personen unmittelbar in den dem projizierenden Laser zugänglichen Bereich geraten können. Diese Gefährdung kann sogar extrem hoch werden, wenn aufgrund von Störungen des Projektors, z. B. bei einem Stehenbleiben der Ablenkeinrichtung, der zur Projektion eingesetzte Laser direkt auf eine Person gerichtet ist.

Aber auch bei Rückprojektionen, bei denen die Zuschauer im allgemeinen von den Lasereinrichtungen durch eine Projektionswand getrennt sind, sind Sicherheitsrisiken nicht auszuschließen, selbst wenn sich das gesamte Laserprojektionssystem in einem geschlossenen Gehäuse befindet. Beispielsweise muß ein Servicetechniker das Gehäuse öffnen und zum Justieren das Bild beobachten können. Dabei kann es vorkommen, daß Teile seines Körpers in den dem Laser zugänglichen Bereich geraten.

Für Showlaser, bei denen das Publikum in den vom Laser überstrichenen Raumbereich geraten kann, werden in einzelnen Ländern Normen für eine Sicherheitseinrichtung ausgearbeitet. Diesbezüglich gehen die geplanten Normen aber nicht über einfache Sicherungen hinaus, wie das Vorsehen eines Schlüsselschalters beim Öffnen eines Gehäuses oder eines Notausschalters. Weiter gibt es Vorschriften, die Lasershows so durchzuführen, daß kein Laserstrahl unbeabsichtigt in den Zuschauerraum fallen kann. Selbst bei Einhaltung dieser Vorschriften bleibt die Gefährdung des Publikums sehr hoch, so daß es wünschenswert ist, eine erhöhte Sicherheit für die eingangs genannte Vorrichtung zu schaffen.

Aus anderen technischen Bereichen sind jedoch Sicherheitseinrichtungen bekannt. So ist in der US 5 221 977 vorgeschlagen worden, durch den Einsatz spektralselektiver Mittel nur bestimmte Wellenlängen abzuschirmen und dafür holographische Elemente zu nutzen. Nachteiligerweise werden hier Informationen bei diesen Wellenlängen ausgefiltert, die bei einer Bilderzeugungseinrichtung der genannten Art das Auge des Betrachters erreichen sollen.

Weitere Sicherheitseinrichtungen sehen Mittel zur Abschaltung des Lasers oder zur Reduzierung der Lichtausgangsleistung vor, wenn keine definierte Rückstrahlung aus dem Bereich festgestellt wird, in den der Laser gerichtet ist. Derartige Sicherheitseinrichtungen sind beispielsweise in der DE 33 40 427 A1 und in der WO 94 28 972 beschrieben. Insbesondere in der letztgenannten Druckschrift ist eine Einrichtung dargestellt, bei der ein Laser nur dann anschaltbar sein soll, wenn das für medizinische Anwendungen zu belichtende Körperteil den Laser gegenüber anderen Körperteilen abdeckt. Der Laser wird also nur eingeschaltet, wenn beispielsweise ein zu bestrahlender Finger eine Austrittsöffnung für das Laserlichtbündel verschließt.

Derartige Sicherheitssysteme sind für Vorrichtungen zur Bilderzeugung gemäß dem eingangs genannten Stand der Technik nicht einsetzbar, da hier die Laserstrahlen für das Publikum sichtbar bleiben müssen. Wie vorhergehend gezeigt wurde, wird von den Fachleuten in den Normungsausschüssen keine Möglichkeit angegeben, ein zufälliges Eintreten von Personen in den vom Laser überstrichenen Gefährdungsbereich zu vermeiden.

Der Erfindung liegt die Aufgabe zugrunde, eine Vorrichtung der eingangs genannten Art zu schaffen, bei der hohe Sicherheitsanforderungen in Hinblick auf den Schutz von Personen im Gefahrenbereich eines zur Bilderzeugung eingesetzten Projektionslaserstrahls erfüllt sind.

Die Aufgabe wird ausgehend vom gattungsgemäßen Stand der Technik dadurch gelöst, daß die Bilderzeugungseinrichtung in zwei Betriebsarten schaltbar ist, von denen die erste die Normalbetriebsart für die Projektion und die zweite eine Betriebsart ist, in der die Laserstrahlung für eine in dem dem Laser zugänglichen Bereich befindliche Person unschädlich ist, und daß eine Sicherheitsschaltung mit mindestens einem Sensor vorgesehen ist, durch den ein bezüglich des dem Laser zugänglichen Bereichs größerer, überwachter Bereich zwischen der Bilderzeugungseinrichtung und der Projektionswand auf das Vorhandensein von Objekten überwachbar ist, wobei die Bilderzeugungseinrichtung bei Vorhandensein eines Objekts mittels der Sicherheitsschaltung in die zweite Betriebsart schaltbar ist.

Aufgrund dieser Maßnahme ist zum ersten Mal ein sehr hoher Sicherheitsstandard für Fernsehprojektionssysteme mit Lasern möglich. Dabei wird jedoch genau das umgekehrte Verfahren wie bei den eingangs genannten medizinischen Lasern angewandt. Dort wurde das Gerät in einem gefahrlosen Zustand betrieben, wenn kein Objekt, beispielsweise von einem Sensor, erfaßt wird. Dagegen dient der erfindungsgemäße Sensor dazu, den Laser in eine sichere Betriebsart zu schalten, wenn sich im überwachten Bereich eine Person befindet. Damit weicht die Erfindung wesentlich vom bisherigen Stand der Technik ab.

Das Schalten in die genannte zweite Betriebsart, in welcher der Laser die Personen nicht gefährdet, kann im einfachsten Fall auch ein Ausschalten des Projektionslasers bedeuten. Der Laser kann jedoch, da auch die Ablenkeinrichtung über die Bilderzeugungseinrichtung steuerbar ist, in der zweiten Betriebsart nur dann dunkelgetastet werden, wenn er durch die Ablenkeinrichtung in den Bereich geführt wird, in dem sich die zu schützende Person befindet. Dies eröffnet beispielsweise für den Service die Möglichkeit, daß bei eventuellen Justierarbeiten trotz geöffnetem Gerät das Bild beobachtet werden kann und dieses nur in den Bereichen, in denen ein Körperteil in den dem Laser zugänglichen Bereich eindringt, dunkelgetastet wird. Dabei nimmt der Servicetechniker das Körperteil in Art eines Schattens im Bild wahr und ist so gewarnt, vorsichtiger zu arbeiten.

Erfindungsgemäß ist gewährleistet, daß jedes Objekt, etwa eine Person, die sich in dem überwachten Raum zwischen der Bilderzeugungseinrichtung und der Projektionswand befindet, beziehungsweise in diesen Raum eindringt, aufgrund ihrer eigenen oder einer von ihr reflektierten elektromagnetischen Strahlung oder eines von ihr ausgehenden akustischen Signals durch die Sensoren automatisch bemerkt wird. In einem solchen Fall ermöglichen die Sensoren eine sofortige Beeinflussung des Lasers über die Bilderzeugungseinrichtung, so daß eine Gefährdung des betreffenden Objekts ausgeschlossen ist. Das wird beispielsweise dadurch gewährleistet, daß die Laserleistung innerhalb weniger Millisekunden auf Null oder in den augensicheren Bereich geschaltet wird. Die dadurch mögliche kurze Schaltzeit ist ein wesentlicher Vorteil gegenüber Notausschaltern oder Sicherheitsschaltungen, die von den Normungsausschüssen empfohlen werden. Bei letztgenannten Vorrichtungen sind Schaltzeiten bis zu einigen Sekunden, wenn beispielsweise ein Notausschalter betätigt werden muß, aufgrund der Reaktionszeit eines Schaltenden in Kauf zu nehmen. Dabei sind die Risiken bei leistungsstarken Lasern trotz eines Abschaltens sehr hoch.

Durch die kurzen erfindungsgemäß möglichen Abschaltzeiten wird dieses Risiko stark verringert.

Ein weiterer Vorteil der Erfindung besteht darin, daß ohne Einschränkung der Übertragung des Informationsinhalts mit der Laserstrahlung höchste Sicherheitsanforderungen erfüllt sind. Weitere Vorteile ergeben sich daraus, daß mit den von den Sensoren empfangenen Signalen, z.B. vor Beginn der Projektion, die Homogenität der Projektionswand erkannt und eine etwaige, durch Inhomogenitäten oder hochreflektierende Gegenstände verursachte ungewollte Reflexion auf Personen vermieden werden kann.

Für die Normvorschriften ist geplant, darauf aufmerksam zu machen, daß bei der Sicherung von Showlasem darauf zu achten ist, daß sich keine reflektierenden Gegenstände in dem dem Laser zugänglichen Bereich befinden, aufgrund derer ungewollte Reflexionen von Laserstrahlen in bestimmte Raumbereiche verursacht werden können. Erfindungsgemäß würde jedoch auch ein reflektierendes Objekt erkannt, da die Sensoren allgemein auf die Erfassung von Objekten ausgelegt sind. Ungewollte Reflexionen können also vermieden werden. Insbesondere kann die Sensorinformation diesbezüglich auch so genutzt werden, daß der Projektionslaserstrahl darauf überwacht ist, daß er stets nur auf die Projektionswand trifft und dadurch in seiner räumlichen Ausdehnung begrenzt ist.

Bei einer bevorzugten Weiterbildung der Erfindung setzt sich der überwachte Bereich aus dem dem Laser zugänglichen Bereich und einem Randbereich zusammen, der zum rechtzeitigen Detektieren von Objekten, die sich auf den Gefahrenbereich zubewegen, vorgesehen ist.

Wie vorstehend schon erwähnt wurde, ist eine kurze Abschaltzeit zur Minimierung einer Gefährdung außerordentlich wichtig. Dadurch, daß ein Objekt, wenn es sich auf den dem Laser zugänglichen Bereich zubewegt, aufgrund dieser Weiterbildung schon früh erfaßt wird, kann der Laser schon innerhalb eines Zeitintervalls vor Auftreffen auf die in dem dem Laser zugänglichen Bereich befindliche Person in den lasersicheren Bereich geschaltet werden. Der Laser ist dann schnell genug ausgeschaltet, so daß die in den dem Laser zugänglichen Bereich eintretende Person überhaupt nicht erfaßt wird.

Bei einer bevorzugten Ausgestaltung gemäß einer Weiterbildung der Erfindung ist der Randbereich in jeder durch die Ablenkeinrichtung gegebenen Ablenkrichtung des Lasers in Abhängigkeit vom Detektionsverfahren, den Reaktionszeiten, der Bildgröße und der Eintrittsgeschwindigkeit von Objekten festgelegt. Eine Größe von 10% hat sich insbesondere in der Fernsehprojektionstechnik als vorteilhaft erwiesen. Die schnellste Zeit, in der ein Laserstrahl zufällig auf eine eventuell in den überwachten Bereich eintretende Person treffen kann, ist die Zeilenzeit, die von der Bildnorm abhängig ist. Mit einem Wert von etwa 10% steht damit zum Abschalten des Lasers eine entsprechend große Zeit zur Verfügung, die ohne weiteres ausreicht, den Laser bei einer Vorrichtung der gattungsgemäßen Art dunkelzutasten oder die Intensität so zu dämpfen, daß keine Gefährdung auftritt, denn dieses Zeitintervall ist wesentlich länger als die erforderliche Schaltzeit des Lasers, die durch die Zeit pro Bildpunkt, die bei üblichen TV-Normen eingehalten werden muß, gegeben ist.

Die Sensoren können im einfachsten Fall mechanische Schalter sein, die beim Eintreten von Personen in den Gefahrenbereich beispielsweise durch deren Eigengewicht betätigt werden. Allerdings ist die Schaltzeit von einigen Millisekunden derartiger Schalter sehr hoch. Weiter sind mechanische Schalter sehr störanfällig und stellen einen hohen Aufwand dar. Vor allen Dingen, wenn eine Vorrichtung zur Darstellung von Bildern der eingangs genannten Art in ein bestehendes Kino eingebaut werden sollen, muß für die dann nötige Vielzahl von Schaltern mit sehr hohen Investitionen gerechnet werden. Deshalb sieht eine bevorzugte Weiterbildung der Erfindung vor, daß der mindestens eine Sensor ein zur Erfassung von Veränderungen der aus dem überwachten Bereich kommenden elektromagnetischen Strahlung ist.

Aufgrund dieser Weiterbildung arbeitet der Sensor berührungslos und kann daher zuverlässiger als mechanische Schalter arbeiten. Vorteilhafterweise ist z.B. ein einzelner berührungslos arbeitender Sensor zur Erfassung eines großen Raumbereichs auch wesentlich weniger aufwendig als eine Vielzahl von mechanischen Fußkontakten, die ansprechen, wenn eine Person den dem Laser zugänglichen Bereich betritt.

Gemäß einer bevorzugten Weiterbildung der Erfindung ist der mindestens eine Sensor ein Sensor zum Detektieren der aus dem überwachten Bereich kommenden infraroten Strahlung, vorzugsweise mit Wellenlängen zwischen 700 nm und 14 µm. Mit derartigen Sensoren läßt sich die nicht-sichtbare Strahlung besonders gut erfassen. Vor allen Dingen sind Bauelemente zur Erfassung in diesem Wellenlängenbereich handelsüblich, so daß die Kosten für das Sicherheitsüberwachungssystem aufgrund dieser Weiterbildung gesenkt werden können.

Bei einer vorzugsweisen Weiterbildung der Erfindung ist der mindestens eine Sensor ein Bewegungsmelder nach dem pyroelektrischen Prinzip. Mit diesen werden die Bewegungen eines Objekts erfaßt. Daher lassen sich bewegte Personen von ruhenden Gegenständen unterscheiden, so daß beispielsweise bei Anwendung eines Showlasers, bei der auf einer Bühne Dekorationsgegenstände, Lautsprecher, Monitore, Musikinstrumente u.ä. aufgestellt sind, sichergestellt werden kann, daß die Sensoren nur bewegte Personen erfassen und andere, in dem dem Laser zugänglichen Bereich benötigte Gegenstände nicht zu einem unbeabsichtigten Abschalten des Showlasers führen.

Ähnliche Vorteile ergeben sich auch bei einer anderen bevorzugten Weiterbildung der Erfindung, bei der mindestens ein Sensor ein Thermophilesensor zur berührungslosen Temperaturmessung ist. Mit der Temperaturmessung lassen sich ebenfalls lebende Personen von den meisten Gegenständen in einem Raum unterscheiden. Weiter hat der Thermophilesensor gegenüber Bewegungsmeldern den Vorteil, daß beim berührungslosen Erfassen von Temperaturwerten auch Personen wahrgenommen werden, die sich nicht bewegen, sondern sich möglicherweise schon vor Beginn der Laserprojektion im Gefahrenbereich aufgehalten haben.

Wie vorstehend schon mehrfach erwähnt wurde, ist es von besonderem Vorteil, wenn verschiedene Teilbereiche des dem Laser zugänglichen Bereichs unabhängig voneinander überwacht werden. Für diesen Zweck sieht eine bevorzugte Weiterbildung der Erfindung vor, daß mehrere richtungsempfindliche Sensoren zur Überwachung von jeweils Teilbereichen des überwachten Bereichs vorgesehen sind.

Diesbezüglich läßt sich der Raum besonders gut sichern, wenn gemäß einer vorzugsweisen Weiterbildung der Erfindung diese richtungsempfindlichen Sensoren als flächige Matrix angeordnet sind. Eine flächige Matrix für die Sensoren erlaubt aufgrund entsprechender Untergliederung in Teilbereiche eine besonders gleichmäßige Anordnung zur Überdeckung des gesamten Bereichs, der überwacht werden soll. Bei einer Matrix von richtungsempfindlichen Sensoren ist vor allen Dingen die Überdeckung so vollständig, daß ein einzelner Sensor in eine Matrix auch Signale von benachbarten Bereichen aufnehmen kann. Das erhöht die Sicherheit, da bei Ausfall eines Sensors dessen benachbarte Sensoren die Aufgabe der Überwachung mit übernehmen können.

Besonders wenig aufwendig gestaltet sich diese Weiterbildung der Erfindung, bei der eine Vielzahl von Sensoren verwendet werden soll, wenn diese lichtempfindliche Elemente einer CCD-Matrix sind, wobei zum Erzeugen der Richtungsempfindlichkeit eine Optik vorgesehen ist, die Gegenstände im überwachten Bereich auf dieser CCD-Matrix flächig abbildet. Gemäß dieser Weiterbildung ist eine besonders hohe Ortsauflösung gewährleistet. Da zur Erzeugung der Richtungsabhängigkeit für alle CCD-Matrix-Elemente nur eine einzige Optik vorgesehen sein kann, bleibt so auch der Aufwand trotz der Vielzahl von Sensoren in einem begrenzten, vertretbaren Rahmen.

Insbesondere kann eine Vielzahl von Raumbereichen aufgrund dieser Weiterbildung getrennt überwacht werden, so daß beispielsweise bei einer Person im überwachten Bereich nur diejenigen Teilbereiche des Lasers dunkelgetastet werden können, in denen sich der Umriß der Person abzeichnet. Das heißt, bei zufälligem Eindringen einer Person in den Laserprojektionsbereich entsteht auf der Projektionswand nur ein Schattenbild, ähnlich wie es das Publikum auch analog von der Kinoprojektion gewöhnt ist, so daß der Genuß der Bilddarstellung durch die Sicherheitsüberwachung nur wenig beeinträchtigt ist.

Zwecks Gewinnung von Bildinformationen können auch Baugruppen zur Bildwandlung wie Schieberegister, Steueriogik und Abtastverstärker vorgesehen sein. Die mit Hilfe derartiger Einrichtungen gewonnenen Bildinformationen werden dann so bearbeitet, daß der Projektionsstrahl die Personen oder Gegenstände nicht dem Laserstrahl aussetzt, sondern diese bei entsprechender Ablenkung des Strahles umgeht. Der Projektionslaser muß also zum Schutz der Personen oder Gegenstände nicht abgeschaltet werden. Diese Möglichkeit ist vor allem für die Darstellung von Vektorgraphiken einsetzbar, wie sie im Showbereich üblich sind.

Ähnliche Vorteile wie beim berührungslosen Erfassen mit Hilfe von elektromagnetischer Strahlung ergeben sich auch durch die berührungslose Erfassung von aus dem überwachten Bereich detektierten akustischen Wellen.

Während die vorherstehenden Beispiele im wesentlichen auch passiv arbeiten können, so ist es insbesondere bei dem Beispiel mit den akustischen Wellen nützlich, wenn ein Sender vorhanden ist, mit dem akustische Wellen in den überwachten Bereich gerichtet werden. Bei entsprechender Ausbildung des Senders kann man beispielsweise durch Abtasten mit der erzeugten Welle mittels eines einzigen Senders räumliche Informationen gewinnen. Weiter läßt sich der Sensor gezielt auf den Sender abstimmen, wodurch eine wesentlich höhere Empfindlichkeit aufgrund verringertem Untergrundsignal und somit eine sicherere Überwachung möglich werden. Deswegen ist bei einer bevorzugten Weiterbildung der Erfindung vorgesehen, daß mindestens ein Sender zur Abstrahlung elektromagnetischer und/oder akustischer, bezüglich Frequenz und Intensität für Personen unschädlicher Wellen, in den überwachten Bereich und mindestens ein Sensor zum Erfassen dieser Wellen vorgesehen ist.

Insbesondere kann man den Sender richtungsempfindlich ausgestalten und die Wellen jeweils in gleicher Richtung wie den Projektionslaser führen, wobei jedoch der vorgegebene Randbereich eingehalten wird, so daß die Person im überwachten Bereich rechtzeitig vor Auftreffen des Laserlichts detektiert wird. Daraus ergibt sich der Vorteil, daß bei entsprechend großem Randbereich ausreichend Zeit für das Dunkeltasten oder Abschalten des Laserlichts zur Verfügung steht.

Der Projektionslaser muß auch hier zum Schutz von Personen oder Gegenständen nicht abgeschaltet werden, sondern deren Umrisse können mit einer entsprechend gesteuerten Bewegung der Ablenkeinrichtung oder durch Dunkeltasten des Lasers unter Einhaltung eines Sicherheitsabstandes ausgespart werden.

Insbesondere eignet sich als Sender ein Pilotlaser mit einer Strahlung im nichtsichtbaren infraroten Wellenlängenbereich, insbesondere von 700 nm bis maximal 1500 nm. Damit lassen sich die Vorteile vor allen Dingen auch mit der vorher genannten CCD-Matrix, die in diesem Wellenlängenbereich empfindlich ist, in besonders guter Weise verwirklichen.

Wie vorstehend schon dargestellt wurde, ist es günstig, wenn die Strahlung des Senders im Laserstrahl mitgeführt wird und dabei auch ein Randbereich berücksichtigt wird. Eine besonders einfache Möglichkeit ist gemäß einer Weiterbildung gegeben, bei der die Strahlung des Pilotlasers dem Laserstrahl zur Projektion koaxial und/oder divergierend überlagert ist. Insbesondere wird dabei auch das unsichtbare Licht des Pilotlasers von der Projektionswand zurückgeworfen und vom Sensor erfaßt. Bei Abblocken des Laserlichts des Pilotlasers durch eine in den überwachten Raum eindringende Person wird das Pilotlaserlicht so verändert, daß der Sensor die Laserprojektion in den sicheren Bereich schalten kann.

Eine andere Möglichkeit zur Verwirklichung eines Randbereichs besteht bei einer bevorzugten Weiterbildung darin, daß eine Ablenkeinrichtung für den Pilotlaserstrahl vorgesehen ist, mit der der Pilotlaserstrahl über einen größeren Bereich als der Laserstrahl für die Projektion ablenkbar ist. Insbesondere kann dann der Pilotlaserstrahl auch unabhängig vom Laserstrahl betrieben werden. Vorteilhafterweise ist es deswegen auch möglich, den Pilotlaserstrahl wesentlich schneller zu rastern, um entsprechend lange Zeitintervalle zum Ausschalten des zur Projektion verwendeten Laserstrahls zur Verfügung zu haben.

Bei einer anderen vorteilhaften Weiterbildung der Erfindung ist dem mindestens einen Sensor ein Filter für eine Wellenlänge des Pilotlasers vorgeschaltet. Aufgrund dieser Weiterbildung wird die Ansprechempfindlichkeit des Sensors zur Unterdrückung von Untergrundsignalen bei anderen Wellenlängen als der des Pilotlasers gesteigert, so daß eine fehlerhafte Erfassung weitestgehend ausgeschlossen ist. Bei entsprechender Steigerung der Empfindlichkeit durch das Filter können auch Sensoren für Referenzmessungen zur Ermittlung des Untergrunds vermieden werden, was den Aufwand in vorteilhafter Weise senkt.

Gemäß einer anderen bevorzugten Weiterbildung der Erfindung ist eine Optik vorgesehen, welche die Wellen auf den Sensor zum Erfassen fokussiert. Mit Hilfe der Optik kann der überwachte Bereich bezüglich der Richtungsabhängigkeit des Sensors geeignet eingestellt werden. Zwar kann eine Richtungsempfindlichkeit auch durch Kollimatoren verwirklicht werden, eine Optik hat demgegenüber jedoch den wesentlichen Vorteil, daß alle die Optik erreichenden Wellen auf dem Sensor gesammelt werden können. Dadurch wird dessen Empfindlichkeit gesteigert.

Bei einer anderen bevorzugten Weiterbildung der Erfindung ist der Sender moduliert und insbesondere gepulst amplitudenmoduliert betreibbar und dem mindestens einen Sensor eine Phasen- und Impulslaufzeitmessung, nachfolgend Laufzeitmessung genannt, für die Welle nachgeschaltet, die zur Schaltung in unterschiedliche Betriebszustände der Bilderzeugungseinrichtung über die Laufzeit auf den Abstand zwischen einem detektierten Objekt und dem Laser abfragbar ist. Aufgrund dieser Laufzeitmessung des vom Sender ausgehenden und vom Sensor empfangenen Signals ist es möglich, auch Tiefeninformation zu gewinnen. Mittels dieser Tiefeninformation können unterschiedliche Betriebszustände des Projektors in Abhängigkeit vom Ort einer in dem vom Laser überstrichenen Bereich befindlichen Lasern vorgesehen werden. Dies ist besonders im Hinblick darauf vorteilhaft, daß die Flächendichte des Laserlichts in der Nähe der Projektionswand wesentlich niedriger als in der Nähe des Projektors ist. Das heißt, bei Detektion einer Person in der Nähe des Projektors muß möglicherweise sofort abgeschaltet werden, während bei Detektion einer Person in der Nähe der Projektionswand eine Dunkelschaltung des Laserlichts bei weitem ausreicht. Die Vorrichtung läßt sich anstelle des vorgesehenen Ausschaltens ferner so steuern, daß die Intensität in Abhängigkeit von der Tiefeninformation kontinuierlich gedämpft wird, so daß an jeder Stelle des überwachten Bereiches für eine darin befindliche Person die Laserleistung unterhalb des Gefährdungsbereichs gehalten wird.

Der Sender gemäß einer vorzugsweisen Weiterbildung ist vor allem dann als vorteilhaft anzusehen, wenn er als LED ausgebildet wird. Insbesondere läßt sich das gepulste Modulieren gemäß der vorhergehenden Weiterbildung dann außerordentlich einfach mit einer wenig aufwendigen Oszillatorschaltung bewirken.

Die Sicherheit aller vorgenannten Sicherheitseinrichtungen kann gesteigert werden, wenn gemäß einer anderen bevorzugten Weiterbildung der Erfindung mindestens ein Sensor zur Vorgabe eines Sollwerts, dessen Signal unabhängig vom Objekt im überwachten Bereich gewinnbar ist, und eine Vergleichsschaltung, mit der das Signal des den überwachten Bereich erfassenden Sensors verglichen wird. Mit Hilfe dieser Weiterbildung wird die Störanfälligkeit gesenkt. Es ist denkbar, daß ein Sensor, der auf die Temperatur anspricht, einfach deswegen die Vorrichtung in den personensicheren Zustand schaltet, weil einfach die Temperatur im Raum zu hoch ist oder Streulicht in einem lichtempfindlichen Sensor eine nicht ordnungsgemäße Funktion vorspiegelt, obwohl sich keine Person im überwachten Bereich befindet. Mit Hilfe eines Sollwerts und eines Wertvergleichs zwischen Sensorsignal und Sollwert, der durch den zusätzlichen Sensor gemäß dieser Weiterbildung möglich ist, können derartige Fehlschaltungen verringert oder sogar vollständig vermieden werden.

Die Erfindung wird nachfolgend anhand von den in der Zeichnung beschriebenen Ausführungsbeispielen näher erläutert. Es zeigen:
- Fig. 1: ein Ausführungsbeispiel für eine Vorrichtung zur Darstellung von Bildern;
- Fig. 2: eine Prinzipdarstellung zur Erläuterung der Überwachung eines Raumbereiches zur Vermeidung einer Gefährdung durch den Laser des Ausführungsbeispiels von Fig. 1;
- Fig. 3: eine prinzipielle Darstellung der Ansteuerung der Vorrichtung von Fig. 1 bezüglich der gewünschten Lasersicherheit;
- Fig. 4: eine prinzipielle Darstellung einer Überlagerung eines Projektionslasers mit einem zur Sicherheitsüberwachung eingesetzten Pilotlaser;
- Fig. 5: die Frontansicht eines Projektors in einer mit einer Sicherheitseinrichtung für Laser ausgestatteten Vorrichtung nach Fig. 1;
- Fig. 6: eine Raumüberwachung mit Hilfe eines Bewegungsmelders;
- Fig. 7: ein Ausführungsbeispiel einer Blende zur Veränderung der Größe des Überwachungsbereiches in Abhängigkeit der Größe des projizierten Bildes;
- Fig. 8: eine Vorhangraumüberwachung mittels vier Bewegungsmeldern;
- Fig. 9: ein Ausführungsbeispiel für eine Sicherheitsüberwachung mittels Thermophile-Zeilensensoren;
- Fig. 10: eine vollständige Raumüberwachung mit einer Sensormatrix;
- Fig. 11: ein Projektionssystem mit Infrarotstrahl, der einen größeren Rasterbereich als der Projektionsstrahl hat;
- Fig. 12: ein Flußdiagramm einer aktiven Lasersicherheitseinrichtung;
- Fig. 13: ein Flußdiagramm einer kombinierten passiven Lasersicherheitseinrichtung.

Die erfindungsgemäße Sicherheitseinrichtung läßt sich bei allen Vorrichtungen zur Darstellung von Bildern mit Lasern einsetzen. Zu derartigen Bilderzeugungsvorrichtungen zählen vor allen Dingen auch die heute schon vielfach eingesetzten Showlaser, mit denen Vektorgraphiken sichtbar gemacht werden.

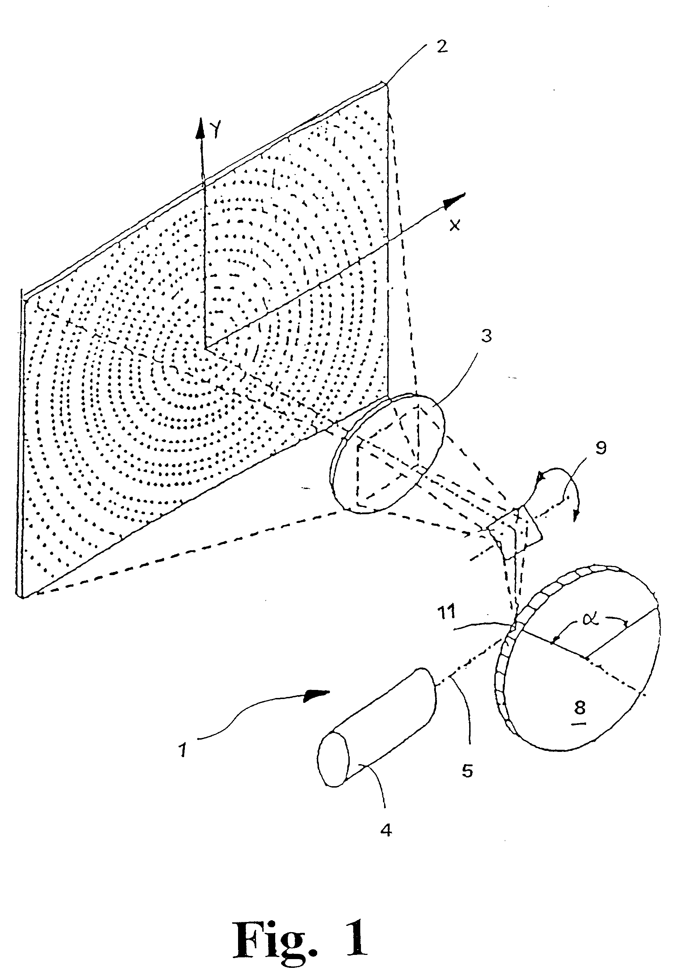

Ein bisher weniger bekanntes Beispiel für den Einsatz von Lasern zur Bilderzeugung ist die Darstellung von Femsehbildern mit Hilfe einer rasternden Bilddarstellung. Eine derartige Bilderzeugungsvorrichtung 1 ist in Fig. 1 schematisch gezeigt. Das Bild entsteht dabei auf einem Bildschirm 2, der den auftreffenden Laserstrahl aufweitet und in einen großen Raumbereich streut, damit das erzeugte Bild für ein großes Publikum sichtbar wird. Wie beim Kino sitzt das Publikum beim Ausführungsbeispiel von Fig. 1 zwischen dem Bildschirm 2 und einer Optik 3, mit der das Bild projiziert wird. Diesbezüglich sei angemerkt, daß die Zeichnung von Fig. 1 nur eine schematische Darstellung ist, d.h. insbesondere die Größenverhältnisse nicht praxisgerecht sind.

Das Bild auf dem Bildschirm 2 wird mit Hilfe eines Lasers 4 durch zeilen- und bildmäßiges Rastern mit einem von ihm ausgesandten Lichtbündel 5 erzeugt. Das Lichtbündel 5 wird mit den Polygonflächen 11 eines Polygonspiegels 8 abgelenkt, der das Lichtbündel 5 auf einer Zeile in x-Richtung auf dem Bildschirm 2 führt. Weiter ist zur Ablenkung ein Schwenkspiegel 9 vorgesehen, der das Lichtbündel in y-Richtung ablenkt. Die Optik 3 weitet den Ablenkbereich auf, so daß auch bei geringem Ablenkwinkel der Spiegel 8 und 11 sehr große Schirme ausgeleuchtet werden können.

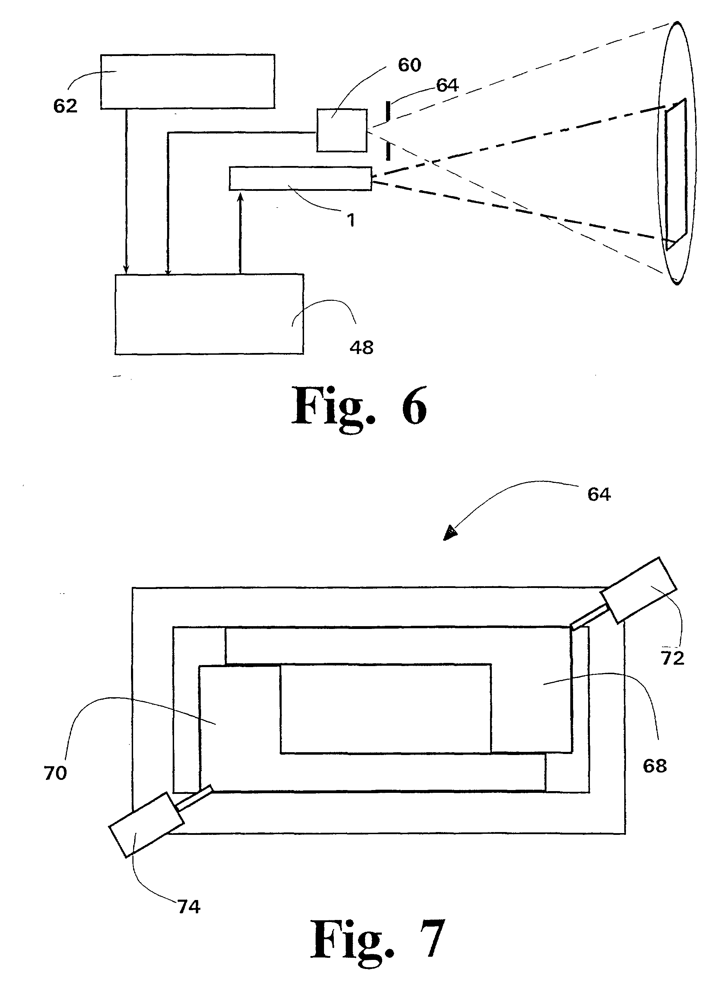

Bei Geräten für den professionellen Einsatz ist die Optik 3 eine Variooptik. Aufgrund dieser ist die Bildgröße und damit der dem Lichtbündel 5 zugängliche Bereich einstellbar. Dies ist in den nachfolgend beschriebenen Sicherheitsvorrichtungen berücksichtigt, wie anhand von Fig. 7 deutlicher wird, da der vom Lichtbündel 5 überstrichene Raumbereich auch Einfluß auf den geforderten überwachten Bereich hat.

Bei der Bilderzeugungsvorrichtung von Fig. 1 erfolgt die Darstellung eines Bildes durch Rastern analog zum Fernsehen. Dabei wird der Laser 4 mit einem Signal gesteuert, das die Intensität des Lichtbündels 5 so intensitätsmoduliert, daß der jeweils beleuchtete Bildpunkt auf dem Bildschirm 2 die bildgemäße Helligkeit erhält. Mit dem Polygonspiegel 8 und dem Schwenkspiegel 9 wird das Lichtbündel 5 gleichmäßig gerastert und alle Bildpunkte des Bildes auf dem Bildschirm 2 sequentiell beleuchtet. In Analogie zum herkömmlichen Fernsehen mit Braunscher Röhre ersetzt der Laser 4 die Elektronenkanone, bzw. bei Farbdarstellung die Elektronenkanonen, und der Polygonspiegel 8 und die Schwenkspiegel 9 die bekannte magnetische oder elektrostatische Ablenkung des Elektronenstrahls.

Der Raumbereich zwischen Optik 3 und Bildschirm 2 kann bei Projektion ähnlich wie im Kino frei zugänglich sein, so daß eine eventuell in diesen Bereich eintretende Person vor Laserstrahlung eventuell hoher Leistung geschützt werden sollte.

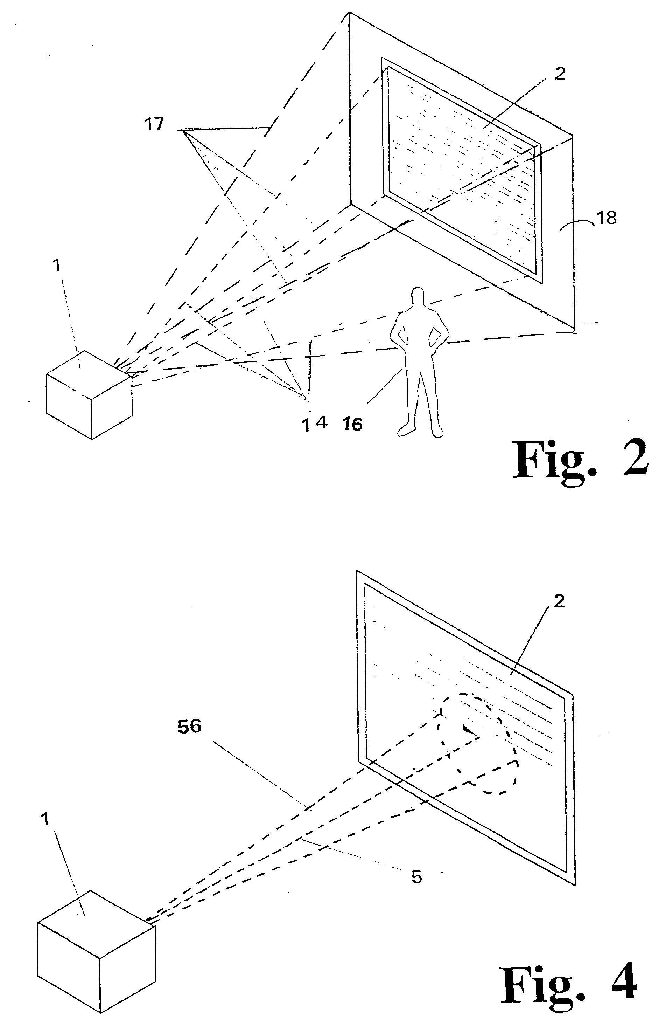

In Fig. 2 sind die in Fig. 1 näher erläuterte Bilderzeugungseinrichtung 1 und der Bildschirm 2 noch einmal schematisch dargestellt. Aus der Bilderzeugungseinrichtung 1, insbesondere aus der in Fig. 1 gezeigten Optik 3, tritt das Lichtbündel 5 aus, das über den gesamten Raumwinkelbereich 14 abgelenkt wird. Das Lichtbündel 5 besteht aus drei Einzelstrahlen mit den Farbanteilen rot, grün und blau, die zu einem kolinearen Strahl vereinigt sind und, wie anhand von Fig. 1 beschrieben wurde, mit einer Videoinformation moduliert sind.

In Fig. 2 ist ein Beobachter 16 schematisch dargestellt, der das auf dem Bildschirm 2 projizierte Laserbild betrachten kann. Er befindet sich gemäß Fig. 2 außerhalb des dem Laser zugänglichen Bereichs 14.

Bei Kinoprojektion können Laser 4 eingesetzt werden, die leistungsklassenmäßig als gefährlich einzustufen sind. Deswegen muß dem Beobachter 16 in derartigen Fällen der Zugang zu dem dem Laser zugänglichen Bereich 14 verboten werden. Trotzdem ist es im allgemeinen möglich, daß der Beobachter 16 während des Laserbetriebs in diesen Gefahrenbereich eindringt und dann vor möglichen Schäden geschützt werden muß. Außerdem sollte schon gemäß Normvorschlägen vermieden werden, daß während des Laserbetriebs Objekte mit hochreflektierenden Oberflächen in dem dem Laserstrahl zugänglichen Bereich 14 angeordnet sind. Vor allem im Showbetrieb ist jedoch eine glitzernde Bühnenausstattung üblich. Reflektierende Objekte sind gefährlich, denn sie würden auch Lichtbündel 5 aus dem dem Laser direkt zugänglichen Bereich 14 ablenken. Das Vorkommen derartiger Objekte sollte daher ebenfalls von einer Lasersicherheitseinrichtung überwacht werden.

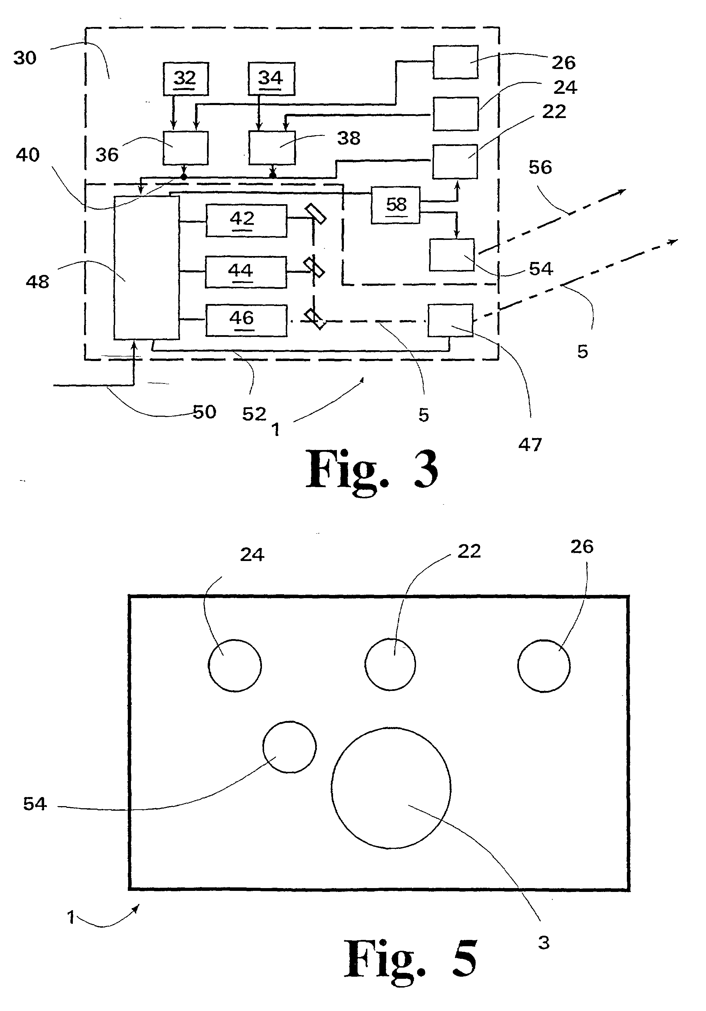

Für eine Sicherheitseinrichtung sind in der Bilderzeugungseinrichtung 1 Sensoren 22, 24 und 26 angeordnet, wie in Fig. 5 zu sehen, welche die Bilderzeugungseinrichtung 1 mit der Optik 3 zeigt, wie sie sich vom Schirm 2 aus darstellt. Diese Sensoren 22, 24 und 26 überwachen einen Bereich 17 auf das Vorhandensein von Gegenständen oder Personen. Der überwachte Bereich 17 hat die Größe des dem Laser zugänglichen Bereichs 14 einschließlich eines überwachten Randbereichs 18. Dieser Randbereich 18 beträgt an den Seiten des recfiteckförmigen Bildes jeweils mindestens 10% der Ausdehnung des Bildes, der überwachte Bereich 17 ist also um jeweils mindestens 10% größer als der durch die Ablenkeinrichtung und die Optik 3 gegebene Raumwinkelbereich.

Der Randbereich 18 ist so groß gewählt, daß Personen, wie der Beobachter 16, die mit hoher Geschwindigkeit in den Bereich 14 eindringen, rechtzeitig von einem der Sensoren 22, 24 oder 26 erkannt werden, wodurch die Bilderzeugungseinrichtung 1 in eine zweite Betriebsart geschaltet wird, die einem in dem dem Laser zugänglichen Bereich 14 befindlichen Beobachter 16 ungefährlich ist. Im einfachsten Falle kann diese zweite Betriebsart ein Ausschalten des Lasers 4 sein. Ein schnellerer Schutz wird jedoch erreicht, wenn der Laser dunkelgetastet wird, da aufgrund der Bilddarstellung bei üblichen Videonormen Schaltzeiten kleiner als Mikrosekunden gefordert werden.

Bei Ansteuerung der Intensität des Lichtbündels 5 muß insbesondere auch nur ein Teilbereich dunkelgetastet werden, in dem sich ein Beobachter 16 befindet, so daß für das übrige Publikum der Bildgenuß nur wenig eingeschränkt wird. Dazu ist aber Voraussetzung, daß der Bereich 17 von verschiedenen Sensoren 22, 24, 26 in verschiedenen Teilbereichen erfaßt wird. Derartige Beispiele werden später noch eingehender beschrieben.

Fig. 3 zeigt beispielhaft, wie die Bilderzeugungsvorrichtung 1 für einen effektiven Schutz angesteuert werden sollte.

In der Darstellung von Fig. 3 sind die drei Sensoren 22, 24, 26 über eine Kontrollschaltung 30 mit der Bilderzeugungseinrichtung 1 verbunden. In der Kontrollschaltung 30 werden die Ausgangssignale der Sensoren 24 und 26 mit Sollwertgebern 32 und 34 über Vergleicher 36 und 38 verglichen. Die Sensoren 24 und 26 sind im konkreten Ausführungsbeispiel infrarotempfindliche Detektoren, in denen der Sollwert über die als Sensoren ausgeführten Sollwertgeber 32, 34 erzeugt wird. Die den Sollwertgebern 32 und 34 zugeordneten Sensoren befinden sich außerhalb des überwachten Bereichs 17 (siehe Figur 2) und sind auch keinen Beobachtern zugänglich, so daß sie prinzipiell die Untergrundinfrarotstrahlung im Raum ermitteln und ein dazu korrespondierendes Signal als Schwellwert vorgeben.

Der Sensor 22 dient dagegen zur aktiven Überwachung des Raumbereichs, wie nachfolgend näher dargestellt werden wird.

Die Signale des Sensors 22, 24 und 26 werden am Knotenpunkt 40 oder-verknüpft, so daß durch jeden der Sensoren auf die Bilderzeugungseinrichtung 1 Einfluß genommen werden kann.

In der Bilderzeugungsvorrichtung 1 sind drei Laser 42, 44, 46 vorgesehen, deren Laserstrahlen zu einem gemeinsamen Lichtbündel 5 zusammengefaßt werden und über eine aus Polygonspiegel 8 und Schwenkspiegel 9 bestehende Ablenkeinrichtung 47 auf den Schirm 2 gelenkt werden. Die Lichtintensitäten der Laser 42, 44, 46 werden von einer Steuereinrichtung 48 angesteuert, in die ein Videosignal 50 eingespeist wird, mit Hilfe dessen auch die Synchronisation der Ablenkeinrichtung 47 über die Leitung 52 durchgeführt wird. Neben der Intensitätsmodulation der Laser 42, 44 und 46 enthält die Steuereinrichtung 48 auch die Stromversorgung für die Laser 42, 44, 46, so daß im einfachsten Falle mit Hilfe des vom Knotenpunkt 40 kommenden Signals die Stromversorgung der Laser 42, 44, 46 zur Sicherung gegen Gefährdung durch das Lichtbündel 5 abgeschaltet werden.

Bei dem in Fig. 3 gezeigten Ausführungsbeispiel gibt es jedoch noch eine weitere Betriebsart. Dazu ist ein Pilotlaser 54 vorgesehen, der einen Pilotlaserstrahl 56 aussendet. Dieser Pilotlaser 54 wird ebenfalls gerastert und tastet den überwachten Bereich 17 ab. Der vorhergehend schon genannte Sensor 22 ist auf die Wellenlänge des Pilotlasers 54 abgestimmt, indem ein λ-Filter vorgeschaltet ist, so daß er im wesentlichen nur auf die Wellenlänge des Pilotlaserstrahls 56 empfindlich ist. Deswegen kann im allgemeinen beim Sensor 22 zur Unterdrückung von Störsignalen auch auf einen Sollwertvergleich, wie bei den Sensoren 24 und 26, verzichtet werden.

Das Rastern des Pilotlasers 56 wird mittels einer Steuerschaltung 58 synchronisiert. Mit Hilfe des rastemden Pilotlaserstrahls 56 kann genau die Position erfaßt werden, in der sich ein störender Gegenstand oder ein Beobachter innerhalb des überwachten Bereichs 17 befindet. Die Laser 42, 44, 46 werden dann nur in den Raumbereichen, in denen das zur Projektion verwendete Lichtbündel 5 auf den Gegenstand auftreffen würde, dunkelgetastet. Dies geschieht über die in der Steuereinrichtung befindliche Intensitätssteuerung der-Laser 42, 44, 46, die in der Lage ist, innerhalb von 1/10 µs zu schalten. Ein Gegenstand oder ein Beobachter 16 wird daher auf dem Bildschirm 2 nur als Schattenbild wahrgenommen und stört das Bilderlebnis für das Publikum nur unwesentlich in einem kleinen Bildbereich.

Vorteilhafterweise kann aufgrund dieser Sicherheitseinrichtung auch eine Projektion erfolgen, wenn reflektierende Gegenstände im Bereich zwischen der Bilderzeugungseinrichtung 1 und dem Schirm 2 aufgebaut sind, wie es beispielsweise bei Showanwendungen vorkommen kann. Dies ist möglich, da auch diese Gegenstände vom Pilotlaserstrahl 56 erfaßt werden, die Steuerschaltung also verhindert, daß das zur Projektion eingesetzte Lichtbündel 5 auf derartige Gegenstände auftrifft. Ohne die Sicherheit zu beeinträchtigen, können daher auch Gegenstände zwischen der Bilderzeugungseinrichtung 1 und dem Schirm 2 angeordnet werden, was dem die Show veranstaltenden Künstler einen größeren Freiheitsgrad für seine künstlerische Ausgestaltung gibt.

In einem anderen, nicht gezeigten Ausführungsbeispiel wurde der Pilotlaser 54 durch eine LED ersetzt, die moduliert und insbesondere gepulst moduliert wurde. Weiter wurde dabei in der Steuereinrichtung 48 eine Laufzeitmessung vorgesehen, d.h. die Pulse wurden bezüglich der Zeit ausgewertet, die das Lichtbündel 56 vom Verlassen der Leuchtdiode bis zum Erreichen des Sensors 22 benötigte. Dadurch erhält man auch eine Tiefeninformation für die Gegenstände. Das Dunkeltasten der Laser 42, 44, 46 kann dann statt eines vollständigen Ausschaltens nur auf eine verringerte Intensität in Abhängigkeit des Abstands eines störenden Gegenstands oder eines Beobachters 16 von der Bilderzeugungsvorrichtung 1 erfolgen. Bei Personen, die sich in der Nähe des Schirms 2 befanden, wurde eine geringere Abschwächung der Intensität der Laser 42, 44, 46 vorgenommen als bei Personen, die sich kurz vor der Bilderzeugungseinrichtung befanden. Bei sehr geringen Abständen zur Bilderzeugungseinrichtung 1 wurden die Laser 42, 44, 46 für das Sicherstellen eines Totalschutzes auch über die Steuereinrichtung 48 durch Abschalten der Stromversorgung stillgelegt.

Ähnlich wie mit der LED oder dem Pilotlaser 5 lassen sich auch akustische Wellen einsetzen, insbesondere im hohen Ultraschallbereich.

Der Sensor 22 ist dann als akustisch empfindliches Element auszuführen.

Prinzipiell käme man mit einer Sicherung mit dem Pilotlaser 54, der entsprechenden Leuchtdiode oder einem Generator für akustische Wellen mit einem einzigen Sensor 22 aus. Im Ausführungsbeispiel von Fig. 3 ist aber eine zusätzliche Sicherheit durch die Schaltung mit den Sensoren 24, 26 und den Sollwertgebern 32, 33 vorgesehen, die die Laser 42, 44 und 46 auf jeden Fall ausschalten, wenn das von den Sensoren 24 und 26 erfaßte Signal und das Ergebnis der Überwachung durch den Sensor 22 nicht übereinstimmen. Dann wird über eine entsprechende Schaltung von der Steuereinrichtung 48 eine Fehlfunktion der Sensoren oder der diese verknüpfenden Logikschaltung angenommen. Dadurch ist ein zusätzlicher Schutz gegeben, indem auch die korrekte Funktion der Sensoren überwacht wird.

Für den Pilotlaser 54 oder die gepulste Leuchtdiode kann zum Rastern des Pilotlaserstrahls 56 eine eigene Rastereinrichtung eingesetzt werden, wie es auch bei dem Ausführungsbeispiel von Fig. 3 vorgesehen war. Bei einem anderen, nicht gezeigten Ausführungsbeispiel wurde das Lichtbündel 56 jedoch über ein Spiegelsystem mit dem zur Projektion eingesetzten Lichtbündel 5 zusammengeführt, so daß beide durch die gleiche Ablenkeinrichtung 47 gemeinsam abgelenkt wurden. Dadurch konnte eine zusätzliche Ablenkeinrichtung eingespart werden. Weiter ist dabei auch die logische Verschaltung zur Dunkeltastung des Lichtbündels 5 einfacher, da keine zusätzlichen Synchronisierschaltungen vorgesehen werden müssen. Der Pilotlaserstrahl 56 wird dann nämlich in räumlicher Überdeckung mit dem Lichtbündel 5 geführt, d.h., beim Auftreffen auf eine Person befinden sich beide Lichtbündel 5 und 56 immer an der gleichen Position, so daß sich das Dunkeltasten durch eine einfache Abschwächerschaltung für das Intensitätssignal der Laser 42, 44, 46 in Abhängigkeit des vom Detektor empfangenen Signals reduziert.

Für den Pilotiaserstrahl 56 ist keine besonders hohe Parallelität erforderlich. Es ist sogar erwünscht, daß der Pilotlaserstrahl 56 weiter ausgedehnt ist als der Projektionslaserstrahl 5, da dann der vorher schon als vorteilhaft beschriebene Randbereich 18 auch bei diesem Ausführungsbeispiel möglich ist. Die ungefähren Verhältnisse zur Sicherstellung eines Randbereichs bei diesem Beispiel sind in Fig. 4 gezeigt. Dort ist deutlich zu sehen, daß das zur Projektion eingesetzte Lichtbündel 5 konzentrisch zum Pilotlaserstrahl 56 liegt. Weiter ist erkennbar, daß der Pilotlaserstrahl 56 auch stark aufgeweitet ist, so daß der gewünschte Randbereich 18 in einfacher Weise gegeben ist. Die erforderliche Aufweitung des Pilotlichtbündels ist beispielsweise immer gegeben, wenn die vorher schon erwähnte Leuchtdiode statt des Lasers 54 verwendet wird.

Im Ausführungsbeispiel von Fig. 4 ist der Pilotlaserstrahl 56 dem Projektionslaserstrahl 5 koaxial und divergent überlagert. Abweichungen von der Koaxialität sind in der Praxis jedoch zugelassen, was vor allen Dingen die Justierarbeit erleichtert. Es kommt hier im wesentlichen darauf an, daß das Lichtbündel 5 in der Nähe des Zentrums des Pilotlaserstrahls 56 auf dem Schirm 2 auftrifft.

Fig. 5 zeigt die Frontansicht der Bilderzeugungsvorrichtung 1 beispielhaft. Deutlich sichtbar ist die Optik 3, aus der das Projektionslichtbündel 5 austritt. Weiter sind die Sensoren 22, 24 und 26 erkennbar in der Nähe der Optik 3 angeordnet. Dies ist besonders vorteilhaft, da so die Forderung in einfacher Weise erfüllt wird, daß der von den Sensoren 22, 24 und 26 erfaßte Bereich praktisch den gesamten, dem Laser zugänglichen Bereich 14 umschließt.

Fig. 6 zeigt ein etwas unterschiedliches Ausführungsbeispiel der Erfindung, das neben den vorher schon dargestellten Sensoren 22, 24 zum Abschalten auch einen Bewegungsmelder 60 enthält. Mit Hilfe dieses Bewegungsmelders 60 können ruhende Gegenstände von bewegten Personen unterschieden werden. Auch dies ist im Showbereich vorteilhaft, da die Sicherheitsschaltung nur bei Personen im überwachten Bereich ansprechen muß. Zusätzliche Sicherheit für stillstehende Personen kann durch einen Thermophilesensor gegeben sein, der ähnlich wie die Sensoren 22 oder 24 verschaltet ist.

Im Beispiel von Fig. 6 ist der Bewegungsmelder 60 an die Steuereinrichtung 48 angeschlossen, die aber in einem speziellen Ausführungsbeispiel den Projektionslaserstrahl 5 einfach mit einem Shutter abblockt. In diesem Ausführungsbeispiel ist auch ein Schlüsselschalter 62 eingezeichnet, der ein Wiedereinschalten des Gerätes nur unter Kontrolle geschulter Aufsichtspersonen gestattet. Weiter ist eine Blende 64 zur Detektion des überwachten Raumbereichs vorgesehen.

Eine derartige Blende ist in Fig. 7 dargestellt, die vor allem auch in vorteilhafter Weise für ein Ausführungsbeispiel ausgestaltet ist, bei dem die Optik 3 ein Variosystem für veränderliche Bildgrößen ist. Wie erwähnt, ist es bei Profigeräten vorteilhaft, die darzustellende Bildgröße variabel zu halten. Zur Änderung des überwachten Bereichs in Abhängigkeit der jeweils eingestellten Bildgröße sind in der Blende 64 von Fig. 7 zwei variable Blendenteile 68 und 70 vorgesehen, die durch Schrittmotoren 72 und 74 hin- und hergefahren werden können, so daß der überwachte Bereich je nach Anwendung mit der darzustellenden Bildgröße korreliert ist. Beim Ausführungsbeispiel wurden die Schrittmotoren 72 und 74 in Abhängigkeit von der Variooptik betätigt. Die dadurch vorgegebene Automatik erhöht ebenfalls die Sicherheit, da Fehleinstellungen des überwachten Bereichs 17 relativ zu dem dem Laser zugänglichen Bereich 14 vermieden werden.

Insbesondere ist bei diesem Ausführungsbeispiel vorgesehen, daß die Schrittmotorsteuerung ein Signal abgibt, mit dem der Projektionslaserstrahl 5 so lange dunkelgetastet wird, bis über die Schrittmotoren 72 und 74 die richtige Größe des überwachten Bereichs eingestellt ist. Auch hierdurch sind die Möglichkeiten der Gefährdung von Personen stark verringert.

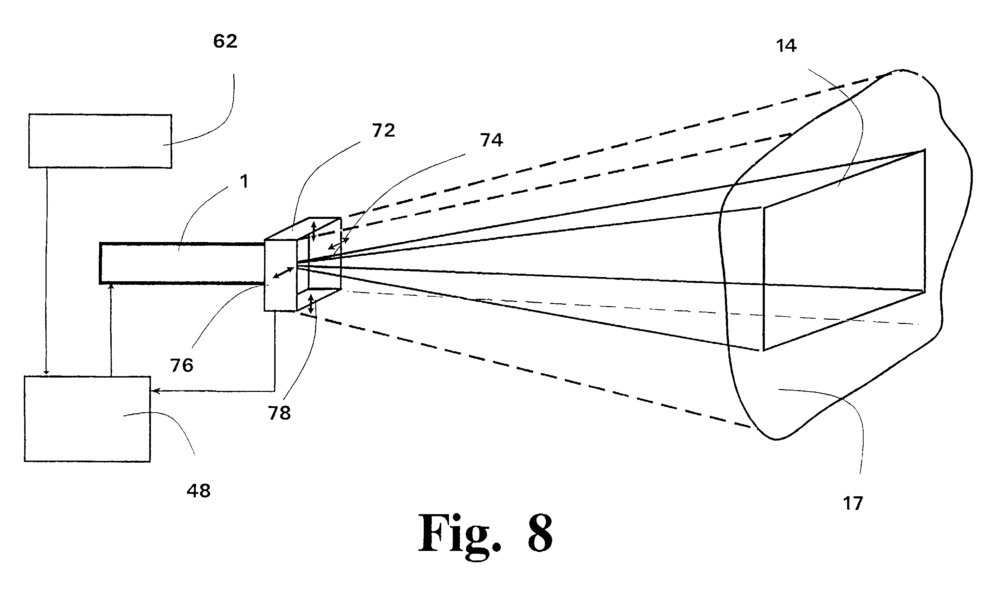

Wie aus der Schemazeichnung von Fig. 6 hervorgeht, gibt es, wenn der Bewegungsmelder 60 etwas außerhalb der Optik 3 des Laserprojektors 1 angeordnet ist, einen kleinen Bereich in der Nähe des Laserprojektors 1, in dem keine Überwachung möglich ist. Um Fehlerquellen dieser Art auszuschalten, sind beim Ausführungsbeispiel von Fig. 8 auch Bewegungsmelder 72, 74, 76, 78 für vier Raumebenen vorgesehen, mit denen die Bewegung in den Randbereichen des dem Laser zugänglichen Bereichs 14 überwachbar ist. Weiter sind in Figur 8 auch wieder ein Schlüsselschalter 62, Steuereinrichtung 48 und die Bilderzeugungseinrichtung 1 dargestellt, die dieselbe Funktion haben, wie schon beim Beispiel von Fig. 6 beschrieben wurde. Bei der Mantelüberwachung gemäß Fig. 8 wird die Eigenschaft von Bewegungsmeldern ausgenutzt, daß sie im wesentlichen nur für Bewegung in einer Raumrichtung empfindlich sind. Die Richtung der Bewegungsempfindlichkeit ist bei den Bewegungsmeldern 72, 74, 76 und 78 als Pfeil schematisch dargestellt.

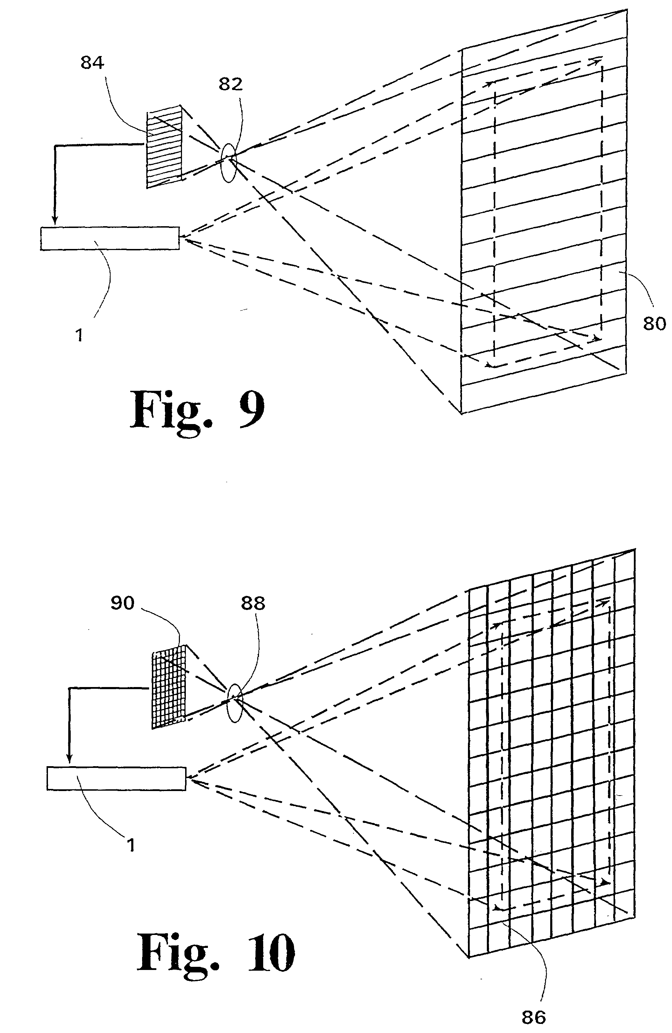

Fig. 9 zeigt beispielhaft die vollständige Raumüberwachung mittels Thermophile-Zeilensensoren. Dabei wird der Raum in zeilenmäßig unterteilten Teilbereichen überwacht. Fig. 9 zeigt beispielhaft die dann entstehende Erfassungscharakteristik 80. Bei diesem Ausführungsbeispiel wird dafür eine Optik 82 eingesetzt, die den überwachten Raumbereich auf eine Pyrometerzeile 84 abbildet. Dadurch ist eine zeilenmäßige Ortsinformation für die Überwachung gegeben. Die Ortsinformation wird nach entsprechender Auswertung verwendet, um den Laser nur in Teilbereichen auszuschalten, in denen ein Gegenstand oder ein Beobachter 16 in den dem Laser zugänglichen Bereich 14 eingedrungen ist.

In Fig. 10 ist ein demgegenüber verbessertes Ausführungsbeispiel mit einer matrixartigen Erfassungscharakteristik 86 gezeigt. Diese Erfassungscharakteristik entsteht hier durch eine Optik 88, die den überwachten Bereich auf eine Sensormatrix 90 fokussiert. Die Sensormatrix 90 kann auch eine Pyrometermatrix oder eine Vielzahl von Thermophilesensor in Matrixanordnung sein. Besonders sind aus Kostengründen bei einer sehr großen Anzahl von Matrixelementen aber auch CCD-Elemente geeignet, die zur Auswertung der Überwachung und Abschwächung des Lichtbündels 5 wie bei einer Fernseh-CCD-Kamera ausgelesen werden, wonach eine entsprechende Schaltung das Lichtbündel 5 nur in den Raumbereichen dunkeltastet, in denen ein Objekt oder ein Beobachter von der Sensormatrix 90 erfaßt werden.

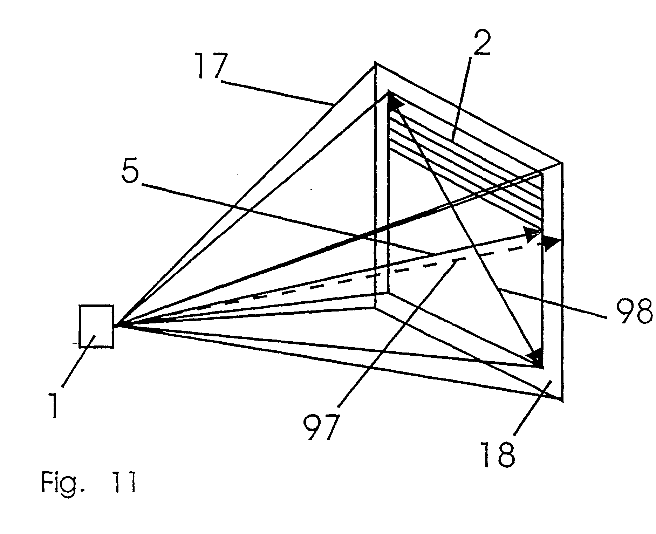

Fig. 11 zeigt ein Ausführungsbeispiel, bei dem die Sicherheitsüberwachung mit Hilfe eines Pilotlaserstrahls 97 durchgeführt wird. Dieser wird hier ebenfalls gerastert, das Feld des Rasterns ist aber wesentlich größer als das des für die Bilderzeugung eingesetzten Lasers. Dadurch entsteht hier wieder ein Randbereich 18, der vorgesehen ist, um ein schnelles Abschalten des Lasers über die Sicherheitseinrichtung zu erreichen, bevor ein Objekt oder eine Person in den Projektionsbereich 14 eindringen kann.

Dies läßt sich mit einer eigenen Ablenkeinrichtung für den Projektionslaserstrahl 97 erreichen. Beim Ausführungsbeispiel wurde jedoch eine andere Möglichkeit gewählt. Bei diesem wird der Laserstrahl 5 zur Bilddarstellung und der Projektionslaserstrahl 97 durch dieselbe Ablenkeinrichtung 47 gerastert. Der Rasterbereich der Ablenkeinrichtung 97 wurde dabei jedoch gegenüber dem zur Bilddarstellung benötigten Bereich vergrößert. Der Laserstrahl 5 zur Projektion wird allerdings während der gesamten Zeitdauer des Überstreichens des Randgebiets 18 dunkelgetastet. Somit entsteht ein Randbereich, der nur durch den Pilotlaserstrahl 97 gerastert wird.

Statt eine Vergrößerung des Ablenkbereichs vorzusehen, kann die Bildgröße bei Auslesen des Bildes aus einem Bildspeicher auch bezüglich der darzustellenden Bildschirmdiagonale 98 verkleinert werden, wodurch ebenfalls für die Abbildung ein Randbereich 18 festgelegt wird, der nicht zur Bilddarstellung genutzt wird.

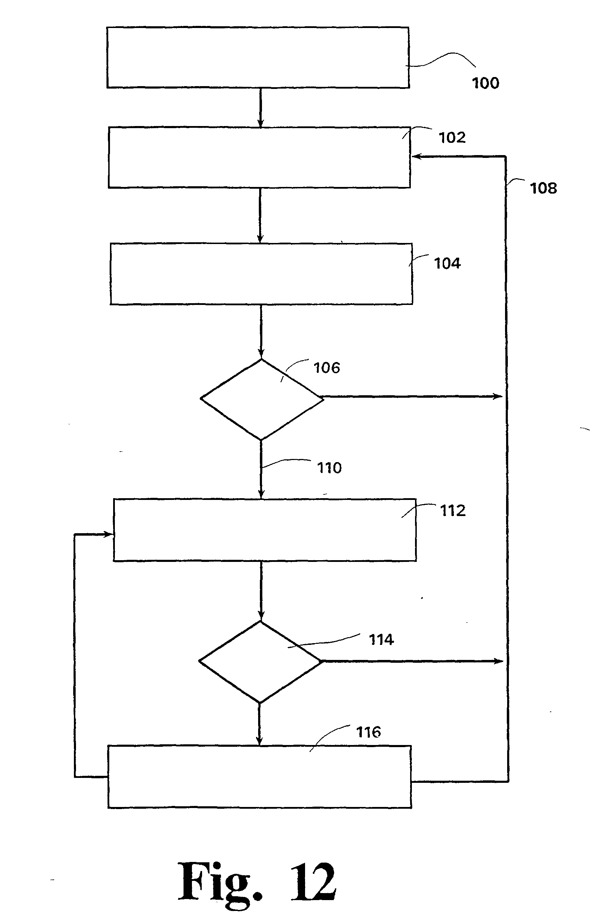

Fig. 12 zeigt ein Flußdiagramm einer aktiven Lasersicherheitseinrichtung, die insbesondere für den Einsatz innerhalb des Wohnbereichs vorgesehen ist. Der in Fig. 12 gezeigte Schritt 100 kennzeichnet das Einschalten des Laserprojektors mit dunkelgetastetem Laserlicht. Im steuerungsmäßig wiederholt durchlaufenen Schritt 102 werden die Modulatoren des Laserstrahls ebenfalls dunkelgetastet und ein Pilotlaserstrahl in den Projektionsraum gelenkt. Der Projektionslaserstrahl 97 ist dabei gepulst moduliert und es ist eine Laufzeitmessung vorgesehen. Zur Auswertung der Laufzeitmessung bei ausgeschaltetem Laserstrahl zur Bilddarstellung wird im Schritt 104 die Laufzeit über die Phasenlage des detektierten und reflektierten Pilotlaserstrahls 97 aufgenommen und ausgewertet. Wenn bei der Auswertung der Laufzeit festgestellt wird, daß ein Objekt im Projektionsbereich vorhanden ist, schaltet die Steuerung über den Pfad 108 zurück auf den Schritt 102, und zwar so lange, bis kein Objekt mehr innerhalb des Sicherheitsbereichs detektiert wird.

Bei fehlendem Objekt im Sicherheitsbereich schaltet die Steuerung über den Pfad 110 zum Schritt 112, in dem die Modulatoren für die Laser zur Bilddarstellung auf Modulation geschaltet werden. Das heißt, die Laser sind nicht mehr dunkelgetastet und eine Bilddarstellung erfolgt. Gleichzeitig wird im Schritt 112 weiter die Phase überwacht. Insbesondere ist vorgesehen, daß in Schritt 104 auch die örtlichen Phasenlagen gespeichert werden, so daß im Schritt 112 die jeweils detektierte Phase mit der gespeicherten Phase verglichen werden kann. Dieses Vorgehen ermöglicht eine hohe Flexibilität bezüglich des Bildschirmabstands von der Bilderzeugungseinrichtung 1. Bei Abfrage auf eine festgelegte Phasenlage wäre eine Änderung des Bildschirmabstands nicht möglich, da dann die Signale im Sensor identisch mit dem eines Objekts im Sicherheitsraum wären.

Im Schritt 114 wird wieder die Phasenlage daraufhin abgefragt, ob ein Objekt erkannt worden ist. Im Fall der Erkennung eines Objekts schaltet die Steuerung wieder über den Schritt 108 zum Schritt 102, in dem die Modulatoren ausgeschaltet werden und der Laserstrahl 5 dunkelgetastet wird. Im anderen Falle wird im Schritt 116 wieder die Phase des Pilotlaserstrahls gemessen und im Schritt 112 wieder auf die Detektion eines Objekts im Sicherheitsbereich überprüft.

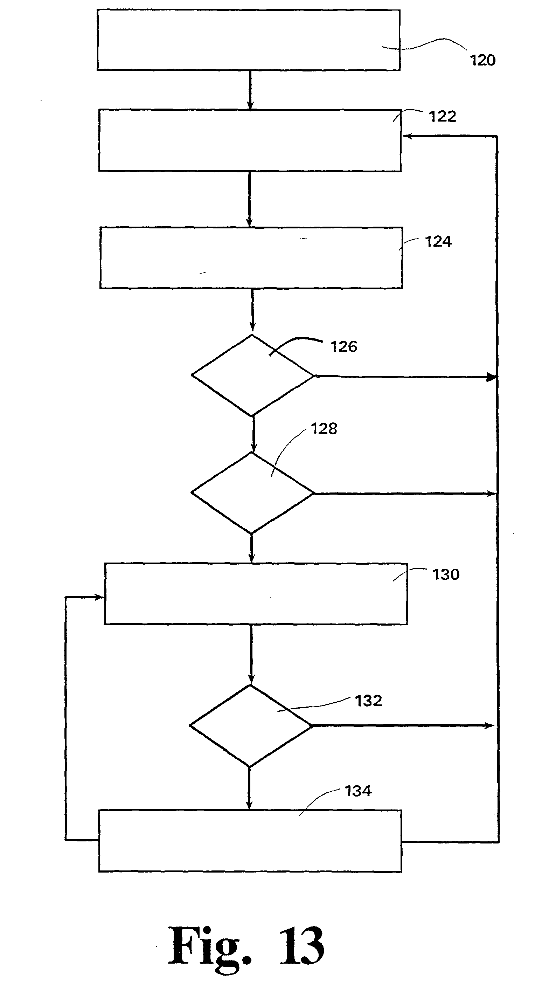

Fig. 13 zeigt ein Flußdiagramm einer kombinierten passiven Lasersicherheitseinrichtung, die insbesondere für den professionellen Bereich vorgesehen ist. Der Sicherheitsprogramm-Ablauf wird durch eine Kombination von zwei Sensoren, nämlich einem pyroelektrischen Sensor und einem Thermophilesensor, durchgeführt.

Der Schritt 120 beinhaltet dabei wieder das Einschalten des Laserprojektors und der Schritt 122 das Ausschalten der Modulatoren, um den Laserstrahl 5 zur Darstellung des Bildes dunkelzutasten. Im Schritt 124 wird gegenüber dem Beispiel von Fig. 12 eine Lernphase zur Messung der Temperatur im Projektionsraum und zur Abstimmung der pyroelektrischen Bewegungsmelder durchgeführt. Im Scfiritt 126 schaltet dabei die Steuerung wieder auf den Schritt 122 zurück, wenn eine Bewegung detektiert wurde, so daß die sogenannte Lernphase im Schritt 124 bei ausgeschaltetem Laserstrahl 5 wieder beginnt. Im anderen Fall wird weiter über den Schritt 128 auf erhöhte Raumtemperatur abgefragt. Ist die Raumtemperatur während des Meßprozesses erhöht, schaltet die Steuerung ebenfalls auf den Schritt 122 zurück, so daß die Lernphase in Schritt 124 bei ausgeschaltetem Laserstrahl 5 wieder beginnt. Ist die Raumtemperatur konstant geblieben, mißt die Steuerung nun Anhaltswerte für die Raumtemperatur zum Vergleich mit Sensorsignalen. Bewegungen werden dabei über den pyroelektrischen Sensor erfaßt. Bei fehlendem Bewegungssignal schaltet die Steuerung zum Schritt 130, in dem die Modulatoren zur Modulation des Laserstrahls 5 eingeschaltet werden. Das heißt, nun kann eine Bilddarstellung erfolgen. Wenn der Bewegungsmelder im Schritt 132 eine Bewegung im Sicherheitsbereich erfaßt, wird die Steuerung zurück auf den Schritt 122 gesetzt. Das heißt, dann werden die Modulatoren ausgeschaltet sowie Bewegungsmelder und Raumtemperatur unter Aufsicht des Personals zur Messung der Temperatur im Projektionsraum im Schritt 124 neu bestimmt. Im anderen Fall wird im Schritt 134 die Raumtemperatur gemessen, worauf der pyroelektrische Sensor zur Erfassung der Bewegung auf die aktuelle Raumtemperatur angeglichen wird. Danach schaltet die Steuerung wieder in den Schritt 130, wonach wieder der Bewegungsmelder im Schritt 132 abgefragt wird usw..

Die vorhergehenden Ausführungsbeispiele zeigen die Vielfalt der Möglichkeiten auf, wie eine Sicherheitseinrichtung der vorgenannten Art verwirklicht werden kann. Insbesondere wurden verschiedene Möglichkeiten aufgezeigt, wie durch zusätzliche Verschaltung, insbesondere auch von weiteren Sensoren, eine größtmögliche Sicherheit erreicht werden kann. Insbesondere ist die Überwachung in Teilbereichen für die Praxis der Femsehprojektion besonders vorteilhaft, da eintretende Personen in den Sicherheitsbereich nur als Schattenbild auf der Projektionsfläche sichtbar werden. Dadurch wird der Bildgenuß des Publikums nur wenig gestört.

## Patentansprüche

1. Vorrichtung zur Darstellung von Bildern auf einer Projektionswand (2), mit einem einen Laserstrahl (5) aussendenden Laser (4; 42, 44, 46) sowie mit einer zur Ablenkung des Laserstrahls (5) vorgesehenen Ablenkeinrichtung (8, 9; 47) und mit einer Bilderzeugungseinrichtung (1), die an einer Steuereinrichtung (48) zur Steuerung des Lasers sowie der Ablenkeinrichtung (8, 9; 47) angeschlossen ist, **dadurch gekennzeichnet, daß** die Bilderzeugungseinrichtung (1) in zwei Betriebsarten schaltbar ist, von denen die erste der Normalbetrieb für die Projektion und die zweite eine Betriebsart ist, in der die Laserstrahlung für eine in dem dem Laser (4; 42, 44, 46) zugänglichen Bereich (14) befindliche Person (16) unschädlich ist, und daß eine Sicherheitsschaltung mit mindestens einem Sensor (22, 24, 26; 60; 72, 74, 76, 78; 84; 90) vorgesehen ist, durch den ein bezüglich des dem Laser zugänglichen Bereichs (14) größerer, überwachter Bereich (17) zwischen der Bilderzeugungseinrichtung (1) und der Projektionswand (2) auf das Vorhandensein von Objekten überwachbar ist, wobei die Bilderzeugungseinrichtung (1) bei Vorhandensein eines Objekts von der Sicherheitsschaltung in die zweite Betriebsart schaltbar ist.

2. Vorrichtung nach Anspruch 1, **dadurch gekennzeichnet, daß** der überwachte Bereich (17) sich aus dem dem Laser (4; 42, 44, 46) zugänglichen Bereich (14) und einem Randbereich (18) zusammensetzt, der zum rechtzeitigen Detektieren von Objekten, die sich auf den Gefahrenbereich zubewegen, vorgesehen ist.

3. Vorrichtung nach Anspruch 2, **dadurch gekennzeichnet, daß** der Randbereich (18) in jeder durch die Ablenkeinrichtung (8, 9; 47) vorgegebenen Ablenkrichtung für das Laserlichtbündel (5) größer als 10% ist.

4. Vorrichtung nach einem der Ansprüche 1 bis 3, **dadurch gekennzeichnet, daß** der mindestens eine Sensor (22, 24, 26; 60; 72, 74, 76, 78; 84; 90) ein Sensor zur Erfassung von Veränderungen der aus dem überwachten Bereich (17) kommenden elektromagnetischen Strahlung ist.

5. Vorrichtung nach einem der Ansprüche 1 bis 4, **dadurch gekennzeichnet, daß** der mindestens eine Sensor (22, 24, 26; 60; 72, 74, 76, 78; 84; 90) ein Sensor zum Detektieren der aus dem überwachten Bereich (17) kommenden Wärmestrahlung, vorzugsweise der Wellenlängen zwischen 700 nm und 14 µm, ist.

6. Vorrichtung nach einem der Ansprüche 1 bis 5, **dadurch gekennzeichnet, daß** der mindestens eine Sensor (22, 24, 26; 60; 72, 74, 76, 78; 84; 90) ein Bewegungsmelder nach dem pyroelektrischen Prinzip ist.

7. Vorrichtung nach einem der Ansprüche 1 bis 5, **dadurch gekennzeichnet, daß** der mindestens eine Sensor (22, 24, 26; 60; 72, 74, 76, 78; 84; 90) ein Thermophilesensor zur berührungslosen Temperaturmessung ist.

8. Vorrichtung nach einem Ansprüche 1 bis 7, **dadurch gekennzeichnet, daß** mehrere richtungsempfindliche Sensoren (22, 24, 26; 60; 72, 74, 76, 78; 84; 90) zur Überwachung von jeweils Teilbereichen des überwachten Bereiches (17) vorgesehen sind.

9. Vorrichtung nach Anspruch 8, **dadurch gekennzeichnet, daß** die richtungsempfindlichen Sensoren (22, 24, 26; 60; 72, 74, 76, 78; 84; 90) als flächige Matrix angeordnet sind.

10. Vorrichtung nach Anspruch 9, **dadurch gekennzeichnet, daß** die Sensoren (22, 24, 26; 60; 72, 74, 76, 78; 84; 90) lichtempfindliche Elemente einer CCD-Matrix sind, wobei zum Erzeugen der Richtungsempfindlichkeit eine Optik (82; 88) vorgesehen ist, die Gegenstände im überwachten Bereich (17) auf dieser CCD-Matrix flächig abbildet.

11. Vorrichtung nach einem der Ansprüche 1 bis 10, **dadurch gekennzeichnet, daß** mindestens einer der Sensoren (22, 24, 26; 60; 72, 74, 76, 78; 84; 90) zur Erfassung von aus dem überwachten Bereich kommenden akustischen Wellen ausgebildet ist.

12. Vorrichtung nach einem der Ansprüche 1 bis 11, **dadurch gekennzeichnet, daß** mindestens ein Sender (54) zur Abstrahlung elektromagnetischer und/oder akustischer, bezüglich Frequenz und Intensität für Personen (16) unschädlicher Wellen in den überwachten Bereich (17) und mindestens ein Sensor (22) zum Erfassen dieser Wellen vorgesehen ist.

13. Vorrichtung nach Anspruch 12, **dadurch gekennzeichnet, daß** als Sender ein Pilotlaser (54) mit einer Strahlung im nichtsichtbaren, infraroten Wellenlängenbereich von 700 nm bis maximal 14 µm vorgesehen ist.

14. Vorrichtung nach Anspruch 13, **dadurch gekennzeichnet, daß** die Strahlung (56) des Pilotlasers (54) dem Laserstrahl (5) zur Projektion koaxial und/oder divergierend überlagert ist.

15. Vorrichtung nach Anspruch 13 oder 14, **dadurch gekennzeichnet, daß** der Pilotlaserstrahl (97) mittels einer Ablenkeinrichtung (8, 9; 47) über einen gegenüber der für die Bilddarstellung vergrößerten Ablenkbereich rasterbar ist.

16. Vorrichtung nach einem der Ansprüche 13 bis 15, **dadurch gekennzeichnet, daß** dem mindestens einen Sensor ein Filter für eine Wellenlänge des Pilotlasers vorgeschaltet ist.

17. Vorrichtung nach einem der Ansprüche 12 bis 16, **dadurch gekennzeichnet, daß** eine Optik (82; 88) vorgesehen ist, welche die Wellen auf dem Sensor zum Erfassen fokussiert.

18. Vorrichtung nach einem der Ansprüche 12 bis 17, **dadurch gekennzeichnet, daß** der Sender gepulst betreibbar ist und dem mindestens einen Sensor eine Laufzeitmessung für die Welle nachgeschaltet ist, die zur Schaltung in unterschiedliche Betriebszustände der Bilderzeugungseinrichtung (1) über die Laufzeit auf den Abstand zwischen einem detektierten Objekt und dem Laser (4, 42, 44, 46) abfragbar ist.

19. Vorrichtung nach einem der Ansprüche 12 bis 18, **dadurch gekennzeichnet, daß** der Sender eine LED ist.

20. Vorrichtung nach einem der Ansprüche 1 bis 19, **dadurch gekennzeichnet, daß** mindestens ein Sensor (32, 34) zur Vorgabe eines Sollwerts, dessen Signal unabhängig von Objekten im überwachten Bereich (17) gewinnbar ist, sowie eine Vergleichsschaltung (36, 38) vorgesehen sind, mit der das Signal des den überwachten Bereich (17) erfassenden Sensors (32, 34) vergleichbar ist.

## Claims

1. Device for presentation of images on a projection screen (2), with a laser (4; 42, 44, 46) which emits a laser beam (5) and with a deflector means (8, 9; 47) for deflection of the laser beam (5) and with an image generator (1) which is connected to a control means (48) for controlling the laser and to the deflector means (8, 9; 47), **characterised in that** the image generator (1) can be switched to two modes of operation, of which the first is the normal operation for projection and the second is a mode of operation in which the laser radiation is harmless to a person (16) located in the zone (14) accessible to the laser (4; 42, 44, 46), and that a safety circuit with at least one sensor (22, 24, 26; 60; 72, 74, 76, 78; 84; 90) is provided by means of which a monitored zone (17), which is larger than the zone (14) accessible to the laser, between the image generator (1) and the projection screen (2) can be monitored for the presence of objects, whereby in the event of the presence of an object the image generator (1) can be switched to the second mode of operation by the safety circuit.

2. Device as claimed in Claim 1, **characterised in that** the monitored zone (17) is composed of the zone (14) which is accessible to the laser (4; 42, 44, 46) and a boundary zone (18) which is provided for the prompt detection of objects moving towards the danger zone.

3. Device as claimed in Claim 2, **characterised in that** the boundary zone (18) in each deflection direction predetermined by the deflector means (8, 9; 47) for the laser beam (5) is greater than 10%.

4. Device as claimed in one of Claims 1 to 3, **characterised in that** the at least one sensor (22, 24, 26; 60; 72, 74, 76, 78; 84; 90) is a sensor for detection of changes to the electromagnetic radiation coming from the monitored zone (17).

5. Device as claimed in one of Claims 1 to 4, **characterised in that** the at least one sensor (22, 24, 26; 60; 72, 74, 76, 78; 84; 90) is a sensor for detection of the heat radiation coming from the monitored zone (17), preferably of the wavelengths between 700 nm and 14 µm.

6. Device as claimed in one of Claims 1 to 5, **characterised in that** the at least one sensor (22, 24, 26; 60; 72, 74, 76, 78; 84; 90) is a motion sensor according to the pyroelectric principle.

7. Device as claimed in one of Claims 1 to 5, **characterised in that** the at least one sensor (22, 24, 26; 60; 72, 74, 76, 78; 84; 90) is a thermopile sensor for contactless temperature measurement.

8. Device as claimed in one of Claims 1 to 7, **characterised in that** a plurality of directional sensors (22, 24, 26; 60; 72, 74, 76, 78; 84; 90) are provided for monitoring of respective part-zones of the monitored zone (17).

9. Device as claimed in Claim 8, **characterised in that** the directional sensors (22, 24, 26; 60; 72, 74, 76, 78; 84; 90) are disposed as a flat matrix.

10. Device as claimed in Claim 9, **characterised in that** the sensors (22, 24, 26; 60; 72, 74, 76, 78; 84; 90) are light-sensitive elements of a CCD matrix, wherein in order to create the directional sensitivity an optical unit (82; 88) is provided by which the objects in the monitored zone (17) are imaged flat on this CCD matrix.

11. Device as claimed in one of Claims 1 to 10, **characterised in that** at least one of the sensors (22, 24, 26; 60; 72, 74, 76, 78; 84; 90) is designed for detection of acoustic waves coming from the monitored zone.

12. Device as claimed in one of Claims 1 to 11, **characterised in that** at least one transmitter (54) is provided for radiation into the monitored zone (17) of electromagnetic and/or acoustic waves which in terms of frequency and intensity are harmless to persons (16) and at least one sensor (22) is provided for detection of these waves.

13. Device as claimed in Claim 12, **characterised in that** a pilot laser (54) with a radiation in the non-visible infrared wavelength range from 700 nm up to a maximum of 14 µm is provided as transmitter.

14. Device as claimed in Claim 13, **characterised in that** the radiation (56) from the pilot laser (54) is superimposed coaxially and/or divergently on the laser beam (5) for projection.

15. Device as claimed in Claim 13 or 14, **characterised in that** the pilot laser beam (97) can be rastered by means of a deflector means (8, 9; 47) over a deflection zone which is greater than that for the image presentation.

16. Device as claimed in one of Claims 13 to 15, **characterised in that** a filter for the wavelength of the pilot laser is connected before the at least one sensor.

17. Device as claimed in one of Claims 12 to 16, **characterised in that** an optical unit (82; 88) is provided which focuses the waves on the sensor for detection.

18. Device as claimed in one of Claims 12 to 17, **characterised in that** the transmitter can be operated in pulsed mode and a transit time measuring means for the wave is connected after the at least one sensor, wherein for switching to different modes of operation of the image generator (1) the said measuring means is interrogated over the transit time concerning the distance between a detected object and the laser (4, 42, 44, 46).

19. Device as claimed in one of Claims 12 to 18, **characterised in that** the transmitter is a LED.

20. Device as claimed in one of Claims 1 to 19, **characterised in that** at least one sensor (32, 34) from which the signal can be obtained irrespective of objects in the monitored zone (17) is provided for predetermination of a desired value, and a comparison circuit (36, 38) is provided with which the signal from the sensor (32, 34) detecting the monitored zone (17) can be compared.

## Revendications

1. Dispositif de projection d'images sur un écran de projection (2), comportant un laser (4 ; 42, 44, 46) émettant un rayon laser (5), ainsi qu'un dispositif de déviation (8, 9 ; 47) prévu pour la déviation du rayon laser (5), et comportant un dispositif de production d'images (1) qui est raccordé à un dispositif de commande (48) pour la commande du laser ainsi que du dispositif de déviation (8, 9 ; 47), **caractérisé en ce que** le dispositif de production d'images (1) peut fonctionner suivant deux modes de fonctionnement, dont le premier est le mode normal pour la projection et le second, un mode de fonctionnement dans lequel le rayonnement laser est inoffensif pour une personne (16) qui se trouve dans la zone (14) accessible au laser (4 ; 42, 44, 46) et **en ce qu'**il est prévu un circuit de sûreté comportant au moins un capteur (22, 24, 26 ; 60 ; 72, 74, 76, 78 ; 84 ; 90) au moyen duquel une zone surveillée (17), plus grande que la zone (14) accessible au laser, peut être surveillée entre le dispositif de production d'images (1) et l'écran de projection (2) quant à la présence d'objets, le dispositif de production d'images (1) pouvant être commandé par le circuit de sûreté pour passer dans le deuxième mode de fonctionnement, en présence d'un objet.

2. Dispositif selon la revendication 1, **caractérisé en ce que** la zone surveillée (17) se compose de la zone (14) accessible au laser (4 ; 42, 44, 46) et d'une zone de bordure (18) qui est prévue pour la détection en temps utile d'objets qui se déplacent vers la zone à risque.

3. Dispositif selon la revendication 2, **caractérisé en ce que** la zone de bordure (18) est supérieure à 10 % dans toute direction de déviation du faisceau de lumière laser (5), définie par le dispositif de déviation (8, 9 ; 47).

4. Dispositif selon l'une des revendications 1 à 3, **caractérisé en ce que** le ou les capteurs (22, 24, 26 ; 60 ; 72, 74, 76, 78 ; 84 ; 90) sont des capteurs de détection de variations du rayonnement électromagnétique provenant de la zone surveillée (17).

5. Dispositif selon l'une des revendications 1 à 4, **caractérisé en ce que** le ou les capteurs (22, 24, 26 ; 60 ; 72, 74, 76, 78 ; 84 ; 90) sont des capteurs de détection du rayonnement thermique provenant de la zone surveillée (17), de préférence de longueur d'onde comprise entre 700 nm et 14 µm.

6. Dispositif selon l'une des revendications 1 à 5, **caractérisé en ce que** le ou les capteurs (22, 24, 26 ; 60 ; 72, 74, 76, 78 ; 84 ; 90) sont des avertisseurs de mouvement selon le principe pyroélectrique.

7. Dispositif selon l'une des revendications 1 à 5, **caractérisé en ce que** le ou les capteurs (22, 24, 26 ; 60 ; 72, 74, 76, 78 ; 84 ; 90) sont des capteurs thermophiles pour la mesure sans contact de la température.

8. Dispositif selon l'une des revendications 1 à 7, **caractérisé en ce que** plusieurs capteurs (22, 24, 26 ; 60 ; 72, 74, 76, 78 ; 84 ; 90) sensibles à la direction sont prévus pour surveiller des zones partielles de la zone surveillée (17).

9. Dispositif selon la revendication 8, **caractérisé en ce que** les capteurs (22, 24, 26 ; 60 ; 72, 74, 76, 78 ; 84 ; 90) sensibles à la direction sont disposés sous la forme d'une matrice plate.

10. Dispositif selon la revendication 9, **caractérisé en ce que** les capteurs (22, 24, 26 ; 60 ; 72, 74, 76, 78 ; 84 ; 90) sont des éléments sensibles à la lumière d'une matrice CCD, une optique (82 ; 88), qui reproduit à plat des objets dans la zone surveillée (17) sur cette matrice CCD, étant prévue pour produire la sensibilité à la direction.

11. Dispositif selon l'une des revendications 1 à 10, **caractérisé en ce qu'**au moins l'un des capteurs (22, 24, 26 ; 60 ; 72, 74, 76, 78 ; 84 ; 90) est conçu pour détecter des ondes acoustiques provenant de la zone surveillée.

12. Dispositif selon l'une des revendications 1 à 11, **caractérisé en ce qu'**il est prévu au moins un émetteur (54) pour émettre des ondes électromagnétiques et/ou acoustiques, inoffensives pour les personnes (16), en ce qui concerne leur fréquence et leur intensité, dans la zone surveillée (17) et au moins un capteur (22) pour détecter ces ondes.

13. Dispositif selon la revendication 12, **caractérisé en ce qu'**il est prévu comme émetteur un laser pilote (54) avec un rayonnement dans la gamme de longueurs d'ondes non visibles, infrarouges, de 700 nm à 14 µm au maximum.

14. Dispositif selon la revendication 13, **caractérisé en ce que** le rayonnement (56) du laser pilote (54) est superposé, coaxialement et/ou de manière divergente, au rayon laser (5) pour la projection.

15. Dispositif selon la revendication 13 ou 14, **caractérisé en ce que** le rayon laser pilote (97) peut être balayé, au moyen d'un dispositif de déviation (8, 9 ; 47), sur une zone de déviation plus grande que celle de la projection d'images.

16. Dispositif selon l'une des revendications 13 à 15, **caractérisé en ce qu'**un filtre pour une longueur d'onde du laser pilote est monté devant le ou les capteurs.

17. Dispositif selon l'une des revendications 12 à 16, **caractérisé en ce qu'**il est prévu une optique (82 ; 88) qui focalise les ondes sur le capteur pour la détection.

18. Dispositif selon l'une des revendications 12 à 17, **caractérisé en ce que** l'émetteur peut fonctionner de manière pulsée et derrière le ou les capteurs, est monté, pour l'onde, un dispositif de mesure de durée qui peut être interrogé, à travers la durée, sur la distance entre un objet détecté et le laser (4, 42, 44, 46), pour la commande dans différents états de fonctionnement du dispositif de production d'images (1).

19. Dispositif selon l'une des revendications 12 à 18, **caractérisé en ce que** l'émetteur est une LED.

20. Dispositif selon l'une des revendications 1 à 19, **caractérisé en ce que** sont prévus au moins un capteur (32, 34) pour définir une valeur de consigne dont le signal peut être obtenu indépendamment d'objets dans la zone surveillée (17), ainsi qu'un circuit de comparaison (36, 38) au moyen duquel peut être comparé le signal du capteur (32, 34) qui détecte la zone surveillée (17).
